# EUROPEAN PATENT SPECIFICATION

(11) **EP 1 318 578 B1**
(45) Date of publication and mention of the grant of the patent: **17.01.2007**
(21) Application number: 02027067.4
(22) Date of filing: 03.12.2002
(51) Int. Cl.: H01S 3/094, H01S 3/23

(54) **Laser device for pumping a solid state laser medium**
Laservorrichtung zum Pumpen eines Festkörperlasermediums
Dispositif laser pour pomper un élément laser à l'état solide

(30) Priority: 10.12.2001 US 6396
(43) Date of publication of application: 11.06.2003
(73) Proprietor: Kopf, Daniel, Dr., 6844 Altach (AT)
(72) Inventor: Kopf, Daniel, Dr., 6844 Altach (AT)
(74) Representative: Kaminski, Susanne

(56) References cited:
- WO-A-01/81955
- US-A- 5 541 951
- US-A- 5 802 092
- US-B1- 6 240 116
- LIU H ET AL: "Directly diode-pumped Yb:KGW kHz regenerative amplifier" LASERS AND ELECTRO-OPTICS, 2001. CLEO/PACIFIC RIM 2001. THE 4TH PACIFIC RIM CONFERENCE ON 15-19 JULY 2001, PISCATAWAY, NJ, USA,IEEE, vol. 1, 15 July 2001 (2001-07-15), pages I554-I555, XP010566254
- PATENT ABSTRACTS OF JAPAN vol. 1999, no. 08, 30 June 1999 (1999-06-30) & JP 11 068197 A (NEC CORP), 9 March 1999 (1999-03-09)

## Description

### Field of the invention:

The invention relates to the field of compact, laser-diode pumped solid state laser sources. In particular the invention relates to the field of pumping of a laser source preferably comprising a regenerative amplifier or other single- or multi-pass amplifier setups.

### Summary of the invention:

For laser sources comprising a regenerative amplifier or other single- or multi-pass amplifier setups a small and focused pump laser spot leads to problems that may be caused for instance by an aperture effect within the gain medium. These problems may result in optical damage, beam distortion and diffraction losses as high gain may occur within a limited volume of the laser medium. A pumping device which produces a pattern-free pump spot with sufficient intensity fulfills the special requirements of this setup. Suitable pump spots have a cross section with a substantially low aspect ratio, that may be defined by the refraction index n as 1:n (e.g. with n=2,16 for Nd:vanadate) or for example is 1:1. A suitable substantially smooth laser diode pump spot is obtained from a laser diode array source or multiple arrays, by imaging each single emitter of the array or the arrays without focusing into substantially the same spot at the laser medium. The invention is defined in claim 1.

### Description of the preferred embodiment of the invention:

The principle of operation of a regenerative amplifier has been known for years. A regenerative amplifier is essentially a laser resonator, trapping a low energy seed pulse and amplifying it to a much higher energy level. This laser setup uses an externally generated laser pulse that is coupled into the resonator by a suitable switch, e.g. a Pockels cell. By changing the polarization state the pulse will be trapped in the resonator and is amplified during subsequent roundtrips in the resonator. At its maximum of energy the pulse will be forced to leave the resonator by passing the switch that again changed the polarization state.

For the use within a regenerative amplifier setup, Laser pump setups with a comparatively low small signal gain in the laser medium are needed compared to a setup with a high aspect ratio or highly asymmetrical pump spot. The according minimal amplification of a few percent up to a factor not much in excess of 4 (i.e. 400%) for one roundtrip is sufficient for this type of setup. This is on the order of 10x less small signal gain than achieved in a setup with an highly asymmetrical pump spot. An embodiment of such a setup with asymmetrical spot is disclosed in the PCT patent application PCT/EP00/05336.

For this type of setup the commonly used small and focused pump laser spots lead to problems like optical damage from high gain within a limited volume of the laser medium and beam distortion as well as diffraction losses. A pumping device, which produces a pattern-free profile with reduced intensity, can fulfill the special requirements of this setup. Instead of a highly asymmetric pump spot an essentially round or elliptically shaped spot is preferable.

The PCT patent application PCT/EP00/05336 discloses a laser diode imaging setup which images the diode beam from a diode array into a substantially smooth spot, in a sense that even if some of the emitters of the diode array fail or degrade, the spot will not substantially change its horizontal intensity pattern, because all emitters are imaged horizontally into the same spot.

Further setups for LD pumping of solid state lasers are known from US-A- 5 541 95 and WO-A-0̸ 181 955.

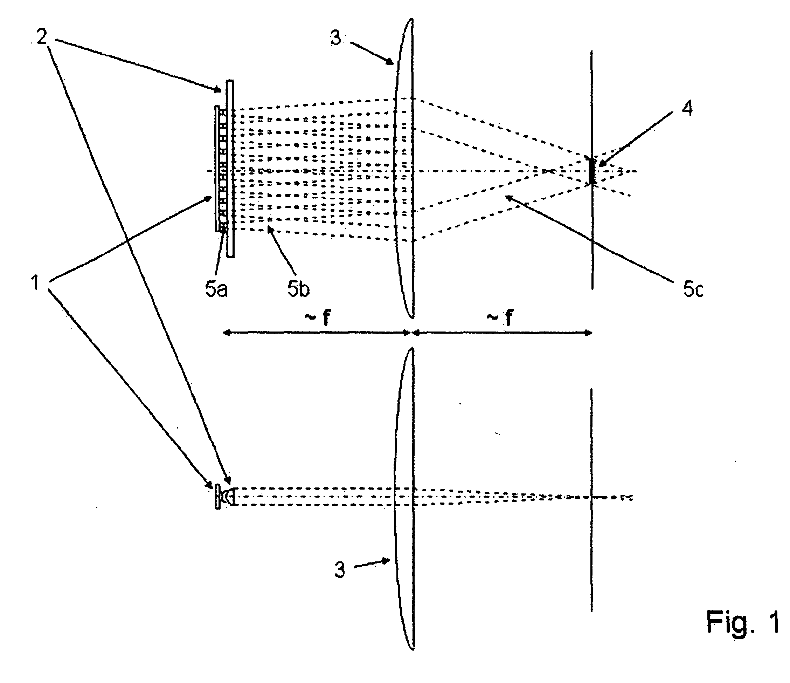

Figure 1 shows that setup from top and from side. A short focal length cylindrical micro lens 2 is positioned at a distance equal to the focal length away from the diode array 1, and collimates the vertical axis (see side view) of the diode light 5a (fast axis collimation). A lens 3 with a focal length f is then placed ca. one focal length f away from the diode laser array 1. The lens 3 then collimates each beam 5b in the horizontal plane (see top view) and directs them to substantially the same spot 4, and focuses the beam 5b in the vertical plane (side view). Because of focusing in the vertical plane (side view) this setup leads to a high intensity pump spot. Therefore this setup, if used for pumping a regenerative amplifier, typically has problems with optical as well as thermal damages or internal inefficiencies due to beam distortion and diffraction losses.

The US patent 5,541,951 discloses another device and method for high-power end pumping of a regenerative amplifier setup. The problems related to the high intensity spot are reduced by a pumping device, which is pulse activated for only approximately four hundred microseconds during each millisecond of operation. A disadvantage of this solution is the complexity of pulse generation and the still high intensity within the pump spot, while only the thermal load is reduced, as the intensity lasts only for a short period of time.

The invention uses a different concept based on different pumping optics. Instead of focusing the pump beam vertically and/or horizontally into the spot, like disclosed in the prior art, according to this invention the partial beams forming said spot are not focused into this spot.

According to this invention the meaning of "collimated" is not limited to a beam formed by different rays wherein these rays are exactly parallel. Therefore "collimated" includes also beams with a small divergence or convergence compared to the dimensions of the setup. The elements of the setup have to be designed and adjusted in such a way that the intensity of the pump spot is kept below a threshold.

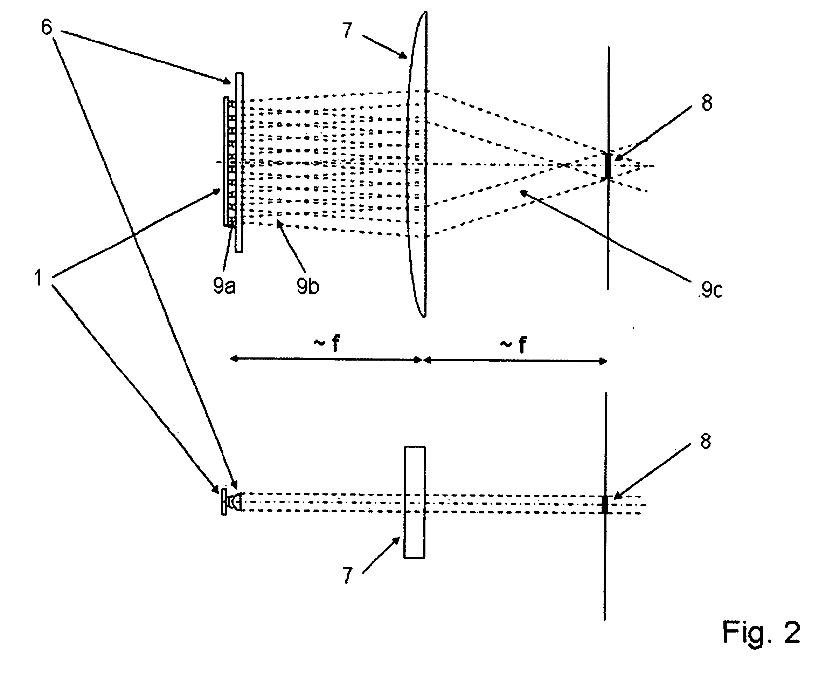

Figure 2 shows - only by way of example - a setup for pumping a laser source, especially comprising a single - or multi-pass amplifier, e.g. a regenerative amplifier. A difference between the setup of Figure 1, as described in the PCT patent application PCT/EP00/05336, is the absence of any focusing of a partial beam that is emitted by each of the emitters into the pump spot.

Figure 2 shows a laser diode imaging setup from the top (above) and from the side (below) which images the diode beam 9a from a diode array 1 into a substantially smooth spot 8 that is imaged onto the surface of a laser medium. If such a laser medium is positioned at or close to the smooth spot obtained from such an imaging apparatus, the temperature profile resulting from absorbed power is also smooth, making fundamental mode operation easier and more efficient.

The beam emitted by each emitter (partial beam 9a) is formed by a multitude of rays of light and can therefore be described by these rays, emitted by a corresponding multitude of emitting points lying on the emitting surface of the diode laser.

The diode laser array 1 according to Figure 2 may be a 5 mm wide array of 13 emitters placed on a single chip, each diode emitter being 200 µm wide and positioned at a 400 µm pitch. In the vertical axis, the emitting area is ca. 1 µm high. The vertical position of each diode emitter does not deviate by more than +/- 0.5 µm from the horizontal plane, corresponding to a diode array "smile" of less than +/- 0.5 µm. This high aspect ratio diode light propagates as shown in Figure 2.

In the horizontal plane (see top view) the diode light (partial beam 9a) of each emitter propagates at a divergence of ca. +/-5°. In the vertical plane (see side view), the divergence can be as high as ca. +/- 45°. Therefore, a short focal length cylindrical micro lens 6 with a focal length of ca. 0.2-1 mm is positioned at a distance equal to the focal length away from the diode array 1, and collimates the strongly divergent emission of the emitter in the vertical axis of the diode light (partial beam 9a).

A cylindrical lens 7 with a focal length f is then placed ca. one focal length f away from the diode laser array 1. The lens 7 then collimates each partial beam 9b in the horizontal plane and directs them to substantially the same spot (top view), without a focusing of the diode light in the vertical plane (side view). Due to the absence of focusing this results in a comparatively low aspect ratio diode laser beam in the spot 8 with a comparatively low intensity, which prevents thermal damages and other problems caused by higher intensities in the regenerative amplifier setup. The spot 8 is smooth in a sense that even if some of the emitters of the diode array 1 fail or degrade, the spot 8 will not substantially change its horizontal and vertical intensity pattern, because all emitters are imaged into the same spot 8.

Alternatively the cylindrical lens 7 does not collimate each partial beam 9b in the horizontal plane, but shapes the partial beams, emitted by each emitter, generally in a way that the rays of light, emitted by a multitude of emitting points on the surface of each emitter, are side by side, uncrossed and not focused in the spot 8, whereby the partial beam 9c is divergent or convergent in the horizontal plane. Note that in case of a convergent beam the focal point should not lay in the plane of the spot 8 but substantially before or behind that plane. A focal point near the spot 8 would not result in a comparatively lower aspect ratio diode laser beam in the spot 8 and therefore a comparatively low intensity.

Alternatively, the said cylindrical micro lens 6 and the said cylindrical lens 7 may be replaced by an optical element, fulfilling substantially the same function as said lenses, e.g. reflective elements or diffractive structures like a holographic element or a fresnel lens.

The terms "horizontal" and "vertical" are defined by the specific setup of the diode array. In these examples the diode emitters are positioned horizontally in a linear array. Therefore the resulting beam has a cross section with an essentially horizontal scope. The examples do not limit the positioning of the emitters or the cross section of the beams to a horizontal setup. For a different orientation of the emitters, e.g. in a vertical linear array, the terms have to be adapted in an appropriate manner.

The according minimal amplification of a few percent up to a factor not much in excess of 4 (i.e. 400%) for one roundtrip is sufficient for this type of setup. The characteristic feature is the product of sigma as the emission cross section and tau as the life time of the upper niveau. This product is equivalent to the small signal gain coefficient. Appropriate values are of the magnitude of 8·10⁻²⁴ sec**cm*² for Nd:YLF or 6·10⁻²³ sec**cm*² for Nd:YAG used as laser medium, the value for Nd:vanadate is approx. four times higher. These small signal gain coefficients result in a small signal gain within the range from a few percent per roundtrip up to a factor of ∼4 when the pumping scheme of Figure 2 is used.

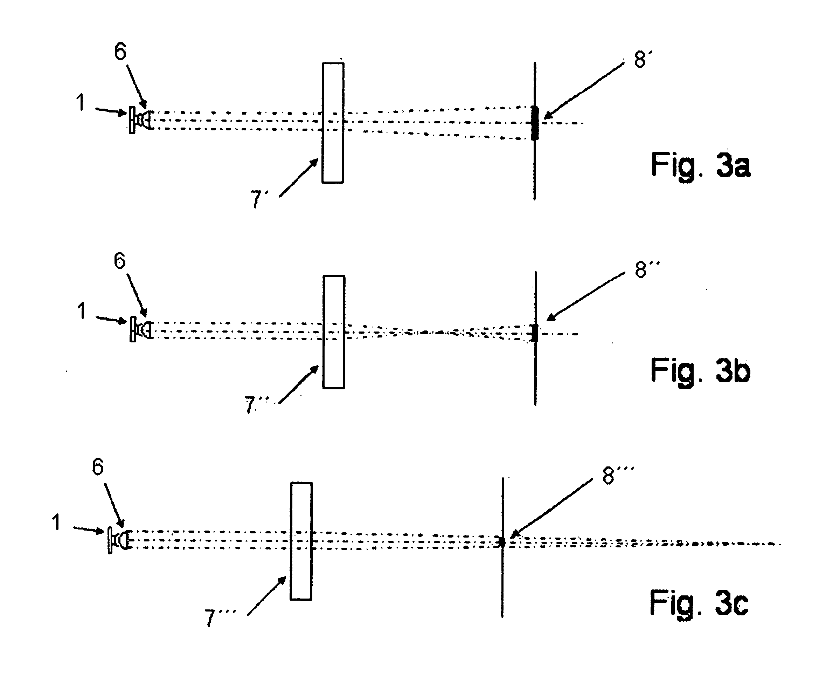

Figures 3a-c show - only by way of example - alternative embodiments of optical elements and the resulting modification of the beam shape in the vertical plane (side view).

In Fig.3a the beam divergence is increased by the optical element 7', e.g. a hologram, and therefore the spot 8' is enlarged in the vertical plane compared to the spot 8 in Fig. 2.

In Fig.3b the optical element 7'', e.g. a fresnel lens, focuses the beam into a focal point at a distance that is substantially smaller than the distance between said optical element 7'' and the spot 8''. In this example the distance between the optical element 7'' and the spot 8'' is twice the focal length of the optical element 7'' in the vertical plane. According to this specific setup the spot 8'' has an identical diameter in the vertical plane as the spot 8 in Fig. 2.

In Fig.3c the optical element 7''', e.g. an astigmatic lens with different focal lengths in the vertical and the horizontal plane, focuses the beam into a focal point at a distance that is substantially larger than the distance between said optical element 7''' and the spot 8'''. According to this setup the spot 8''' has a smaller diameter in the vertical plane compared to the spot 8 in Fig. 2.

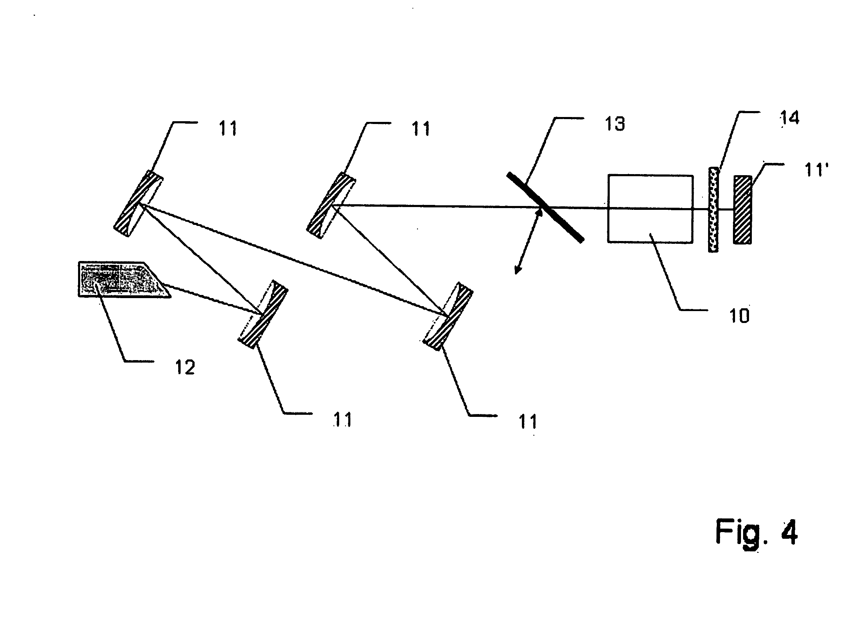

Figure 4 shows the schematic setup of a regenerative amplifier used with a laser means for producing an appropriate pump light beam. A polarized laser pulse from a seed laser source is coupled into the setup by a polarizer 13 and is reflected by a mirror 11' after passing a pockels cell 10 and a quarter-wave plate 14. In dependence of the voltage applied to the pockels cell 10 the polarization of the laser beam is rotated so as to pass the polarizer 13 and enter the cavity or to leave the setup. When the pulse is trapped in the resonator the laser beam is amplified in the laser medium 12 during each roundtrip after multiple reflection by four mirrors 11. After subsequent roundtrips necessary for reaching maximum energy the laser beam is coupled out of the setup by the polarizer 13 after another rotation of the polarization by the pockels cell 10.

## Claims

1. Laser pump device for pumping a solid state laser medium for example in a single-pass or multi-pass amplifier setup, preferably in a regenerative amplifier setup, comprising
- a plurality of laser diode emitters and
- optical means for producing a pump beam by imaging each single emitter into an essentially round or elliptical spot (8, 8',8",8'''),
- at least two of said emitters are mounted in an array (1).
• each of said emitters having a multitude of emitting points on its surface,
• each of said points emitting a ray of light,
• said rays of light of each emitter forming a divergent partial beam (9a);
said optical means comprising
• a first optical element (6) for collimating each partial beam (9a) that is divergent in a first plane in said first plane;**characterized in that** said optical means further comprises
• a second optical element ( 7, 7 ' , 7 " , 7 " ' ) for modifying the divergence of each partial beam (9b) that is divergent in a second plane in said second plane and for directing each partial beam (9a) to
said spot (8) in such a way that:
o the rays of light defining a partial beam (9c) are side by side in said spot (8, 8',8",8"'); and
o said plurality of partial beams (9c) overlap in said spot (8,8',8",8"').

2. Laser pump device according to claim 1,
**characterized in that**
said first optical element (6) is a first lens, preferably a first cylindrical lens, being positioned near the diode array (1) at a distance corresponding to the focal length of said first lens.

3. Laser pump device according to one of the preceding claims, **characterized in that**
said second plane being substantially perpendicular to said first plane.

4. Laser pump device according to one of the claims 2 or 3,
**characterized in that**
said second optical element (7) is adapted for modifying the divergence of each partial beam (9b) in a way that each partial beam (9c) is collimated in said second plane.

5. Laser pump device according to claim 4, ..
**characterized in that**
said second optical element (7) is a second lens, preferably a second cylindrical lens, being positioned at a distance from the diode pumping array (1) corresponding substantially to the focal length (f) of said second lens.

6. Laser pump device according to one of the claims 2, 3 or 4,
**characterized in that**
said second optical element (7') is adapted for modifying the divergence of each partial beam (9b) in a way that each partial beam (9c) is divergent in said second plane.

7. Laser pump device according to one of the claims 2, 3 or 4,
**characterized in that**
• said second optical element (7",7"') is adapted for modifying the divergence of each partial beam (9b) in a way that each partial beam (9c) is convergent in said second plane;
• each partial beam (9c) being convergent in a way that the distance between its focal point and said second optical element (7", 7"') is substantially smaller or larger than the distance between said second optical element (7",7"') and said spot (8",8"').

8. Laser pump device according to one of the preceding claims, **characterized in that**
one of the following elements
• reflective element,
• astigmatic lens (7"') ,
• hologram (7') or a
• fresnel lens (7")
functionally replaces said first optical element and said second optical element.

9. Single-pass or multi-pass amplifier setup,
**characterized by**
a laser pump device according to one of the preceding claims.

10. Single-pass or multi-pass amplifier setup according to claim 9,
**characterized in that**
the setup is a regenerative amplifier setup comprising
• a polarizer (13) for coupling a polarized laser pulse preferably from a seed laser source into said setup;
• a Pockels cell (10), to switch said laser pulse into the amplifier laser cavity and to switch it out after it has been amplified;
• at least one mirror (11, 11') for reflecting said laser pulse;
• a laser medium (12) for amplifying said laser pulse,
• preferably with said pump spot that has a cross section with an aspect ratio defined by the refraction index n of the laser medium as 1:n.

## Patentansprüche

1. Laserpumpvorrichtung zum Pumpen eines Festkörperlasermediums, beispielsweise in einem Single-Pass- oder Multipass-Verstärkeraufbau und bevorzugt in einem regenerativen Verstärkeraufbau, mit
- einer Mehrzahl von Laserdioden-Emittem und
- optischen Mitteln zur Erzeugung eines Pumpstrahls durch Abbildung jedes einzelnen Emitters in einen im Wesentlichen runden oder elliptischen Fleck (8, 8', 8", 8'''),
wobei zumindest zwei der Emitter in einer Anordnung (1) montiert sind,
• jeder der Emitter eine Vielzahl von emittierenden Punkten auf seiner Oberfläche besitzt,
• jeder der Punkte einen Lichtstrahl emittiert,
• die Lichtstrahlen jedes Emitters einen divergenten Teilstrahl (9a) bilden;
wobei die optischen Mittel aufweisen:
• ein erstes optisches Element (6), um jeden Teilstrahl (9a), der in einer ersten Ebene divergent ist, in dieser ersten Ebene zu kollimieren;
**dadurch gekennzeichnet, dass**
die optischen Mittel weiter aufweisen:
• ein zweites optisches Element (7, 7', 7", 7"'), um die Divergenz jedes Teilstrahls (9b), der in einer zweiten Ebene divergent ist, in dieser zweiten Ebene zu modifizieren und um jeden Teilstrahl (9a) in der Weise zu dem Fleck (8) zu lenken, dass
o die einen Teilstrahl (9c) definierenden Lichtstrahlen sich in dem Fleck (8, 8', 8", 8"') nebeneinander befinden und
o die Mehrzahl von Teilstrahlen (9c) sich in dem Fleck (8, 8', 8", 8"') überlappen.

2. Laserpumpvorrichtung nach Anspruch 1,
**dadurch gekennzeichnet, dass**
das erste optische Element (6) eine erste Linse, bevorzugt eine erste zylindrische Linse, ist, die in einem der Brennweite der ersten Linse entsprechenden Abstand nahe der Diodenanordnung (1) positioniert ist.

3. Laserpumpvorrichtung nach einem der vorangehenden Ansprüche, **dadurch gekennzeichnet, dass**
die zweite Ebene im Wesentlichen senkrecht zur ersten Ebene ist.

4. Laserpumpvorrichtung nach einem der Ansprüche 2 oder 3, **dadurch gekennzeichnet, dass**
das zweite optische Element (7) geeignet ist, die Divergenz jedes Teilstrahls (9b) in der Weise zu modifizieren, dass jeder Teilstrahl (9c) in der zweiten Ebene kollimiert wird.

5. Laserpumpvorrichtung nach Anspruch 4,
**dadurch gekennzeichnet, dass**
das zweite optische Element (7) eine zweite Linse, bevorzugt eine zweite zylindrische Linse, ist, die in einem im Wesentlichen der Brennweite (f) der zweiten Linse entsprechenden Abstand von der Diodenpumpanordnung (1) positioniert ist.

6. Laserpumpvorrichtung nach einem der Ansprüche 2, 3 oder 4,
**dadurch gekennzeichnet, dass**
das zweite optische Element (7') geeignet ist, die Divergenz jedes Teilstrahls (9b) in der Weise zu modifizieren, dass jeder Teilstrahl (9c) in der zweiten Ebene divergent ist.

7. Laserpumpvorrichtung nach einem der Ansprüche 2, 3 oder 4,
**dadurch gekennzeichnet, dass**
• das zweite optische Element (7", 7"') geeignet ist, die Divergenz jedes Teilstrahls (9b) in der Weise zu modifizieren, dass jeder Teilstrahl (9c) in der zweiten Ebene konvergent ist;
• jeder Teilstrahl (9c) in der Weise divergent ist, dass der Abstand zwischen seinem Brennpunkt und dem zweiten optischen Element (7", 7"') wesentlich kleiner oder grösser als der Abstand zwischen dem zweiten optischen Element (7", 7"') und dem Fleck (8", 8"') ist.

8. Laserpumpvorrichtung nach einem der vorangehenden Ansprüche, **dadurch gekennzeichnet, dass**
eines der folgenden Elemente:
• ein reflektierendes Element,
• eine astigmatische Linse (7"'),
• ein Hologramm (7') oder
• eine Fresnel-Linse (7")
das erste optische Element und das zweite optische Element funktionell ersetzt.

9. Single-Pass- oder Multipass-Verstärkeraufbau,
**gekennzeichnet durch**
eine Laserpumpvorrichtung nach einem der vorangehenden Ansprüche.

10. Single-Pass- oder Multipass-Verstärkeraufbau nach Anspruch 9,
**dadurch gekennzeichnet, dass**
der Aufbau ein regenerativer Verstärkeraufbau ist, mit
• einem Polarisator (13), um einen polarisierten Laserpuls vorzugsweise von einer Seed-Laserquelle in den Aufbau einzukoppeln,
• einer Pockels-Zelle (10), um den Laserpuls in den Verstärker-Laserresonator hineinzuschalten und ihn, nachdem er verstärkt worden ist, herauszuschalten;
• zumindest einen Spiegel (11, 11'), um den Laserpuls zu reflektieren;
• ein Lasermedium (12), um den Laserpuls zu verstärken,
• bevorzugt mit dem Pumpfleck, der einen Querschnitt mit einem Seitenverhältnis besitzt, das durch den Brechungsindex n des Lasermediums als 1 : n definiert ist.

## Revendications

1. Dispositif de pompage laser pour pomper un milieu laser à état solide, par exemple dans un dispositif amplificateur à passage unique ou à passages multiples, de préférence dans un appareil amplificateur régénératif, comprenant:
- une pluralité d'émetteurs à diode laser, et
- des moyens optiques pour produire un faisceau de pompage en imageant chaque émetteur individuel en un point (8, 8', 8", 8"') essentiellement rond ou elliptique,
- au moins deux desdits émetteurs sont montés en une matrice (1)
• chacun desdits émetteurs ayant une pluralité de points émetteurs sur sa surface,
• chacun desdits points émettant un rayon de lumière,
• lesdits rayons de lumière de chaque émetteur formant un faisceau partiel (9a) divergent ;
lesdits moyens optiques comprenant
• un premier élément optique (6) pour collimater chaque faisceau partiel (9a), qui est divergent dans un premier plan, dans ledit premier plan ;
**caractérisé en ce que** lesdits moyens optiques comprennent en outre:
• un deuxième élément optique (7, 7', 7" , 7"'), pour modifier la divergence de chaque faisceau partiel (9b), qui est divergent dans un deuxième plan, dans ledit deuxième plan, et pour diriger chaque faisceau partiel (9a) sur ledit point (8), de telle manière que:
o les rayons de lumière définissant un faisceau partiel (9c) soient placés côte à côte dans ledit point (8, 8', 8", 8"' ) et
o ladite pluralité de faisceaux partiels (9c) se chevauchent en ledit point (8, 8', 8", 8"').

2. Dispositif de pompage laser selon la revendication 1, **caractérisé en ce que** ledit premier élément optique (6) est une première lentille, de préférence une première lentille cylindrique, positionnée à proximité de la matrice de diodes (1), en une distance correspondant à la distance focale de ladite première lentille.

3. Dispositif de pompage laser selon l'une des revendications précédentes, **caractérisé en ce que** ledit deuxième plan est sensiblement perpendiculaire audit premier plan.

4. Dispositif de pompage laser selon l'une des revendications 2 ou 3, **caractérisé en ce que** ledit deuxième élément optique (7) est adapté pour modifier la divergence de chaque faisceau partiel (9b), d'une manière telle que chaque faisceau partiel (9c) soit collimaté dans ledit deuxième plan.

5. Dispositif de pompage laser selon la revendication 4, **caractérisé en ce que** ledit deuxième élément optique (7) est une deuxième lentille, de préférence une deuxième lentille cylindrique, positionnée à une distance de la matrice de pompage à diodes (1), correspondant sensiblement à la distance focale (f) de ladite deuxième lentille (6).

6. Dispositif de pompage laser selon l'une des revendications 2, 3 ou 4, **caractérisé en ce que** ledit deuxième élément optique (7') est adapté pour modifier la divergence de chaque faisceau partiel (9b), de manière que chaque faisceau partiel (9c) soit divergent dans ledit deuxième plan.

7. Dispositif de pompage laser selon l'une des revendications 2, 3 ou 4, **caractérisé en ce que**
• ledit deuxième élément optique (7", 7"') est adapté pour modifier la divergence de chaque faisceau partiel (9b), de manière que chaque faisceau partiel (9c) soit convergent dans ledit deuxième plan ;
• chaque faisceau partiel (9c) étant convergent, de manière que la distance, entre son point focal et ledit deuxième élément optique (7", 7"'), soit sensiblement plus petite ou plus grande que la distance entre ledit deuxième élément optique (7", 7"') et ledit point (8", 8"').

8. Dispositif de pompage laser selon l'une des revendications précédentes **caractérisé en ce que** l'un des éléments suivants
• élément réflectif,
• lentille astigmatique (7'''),
• hologram (7'), ou une
• lentille de fresnel (7")
remplace fonctionnellement ledit premier élément optique et ledit deuxième élément optique.

9. Dispositif amplificateur à passage unique ou à passages multiples, **caractérisé par** un dispositif de pompage laser selon l'une des revendications précédentes.

10. Dispositif amplificateur à passage unique ou à passages multiples selon la revendication 9,
**caractérisé en ce que**
le dispositif est un dispositif amplificateur régénératif, comprenant
• un polariseur (13), pour coupler une impulsion laser polarisée, de préférence venant d'une source d'ensemencement laser, dans ledit dispositif ;
• une cellule de Pockels (10), pour commuter ladite impulsion laser dans ladite cavité de laser amplificateur et pour la décommuter après avoir été amplifiée ;
• au moins un miroir (11, 11') pour réfléchir ladite impulsion laser,
• un milieu laser (12), pour amplifier ladite impulsion laser,
• de préférence avec ledit point de pompage ayant une section transversale présentant un taux d'aspect, défini par l'indice de réfraction n du milieu laser, comme étant 1:n.
